# EUROPEAN PATENT SPECIFICATION

(11) **EP 2 647 279 B1**
(45) Date of publication and mention of the grant of the patent: **24.12.2014**
(21) Application number: 13000828.7
(22) Date of filing: 19.02.2013
(51) Int. Cl.: A01D 87/02, B65G 15/44, B65G 45/12

(54) **Belt conveyor cleaning device**
Bandförderer-Reinigungsvorrichtung
Dispositif de nettoyage d' une bande convoyeuse

(30) Priority: 20.02.2012 CZ 201225649 U; 20.02.2012 CZ 20120117
(43) Date of publication of application: 09.10.2013
(73) Proprietor: Schenck Process, S.R.O., 161 00 Praha 6 (CZ)
(72) Inventor: Kuhn, Jan, CZ-14200 Prague 4 (CZ); Pfleger, Pavel, CZ-18200 Prague 8 (CZ); Mikulec, Michal, CZ-27361 Volka Dobra (CZ)
(74) Representative: Ellspermann, Ina

(56) References cited:
- GB-A- 480 061
- JP-A- 60 213 605
- US-A- 4 321 996

## Description

The invention relates to a cleaning device for a belt conveyor comprising a conveyor belt that runs in a tunnel housing and that has ribs attached to its upper side perpendicular to the direction of movement.

This type of belt conveyors as described in the CZ20090492 are intended especially for steep to vertical ascending transportation of essentially non-abrasive loose material with bulk weights up to 0.3 tonnes/m3. Examples of suitable loose materials include foliage, dry grass, straw, and especially so-called solid alternative fuels, which may contain the aforesaid components. In the ascending branch, the back of the conveyor belt slides along a resting surface, attached to the load-carrying frame. During transportation, the loose material is moved, or pushed, by the ribs in the form of something resembling a cork, the cross-section of which is the shape of the tunnel housing clearance. The tunnel housing comprises a dome equidistant to the ribs, and side boards. The side boards of the ascending branch are adapted to allow the passage of the smooth edges of the conveyor belt, i.e., those portions of the conveyor belt in which the ribs do not reach with their crosswise dimension. The space between the carrying surface of the conveyor belt and the side board is commonly sealed. On the contrary, the backs of the smooth edges of the conveyor belt slide directly along the side boards in the return branch.

However, the above specified belt conveyors suffer contamination of the underside of their conveyor belt. This drawback is particularly manifest where it comes into contact with the rollers: the friction coefficient changes where the driving roller comes into contact with the conveyor belt. If a hard object such as a stone sticks to the underside, it may cause serious damage to the driving, return and other rollers as well as the conveyor belt and the resting surface of the ascending branch. Another drawback of the known executions is that the smooth edges of the conveyor belt carrying surface also become contaminated.

The above drawbacks are considerably attenuated by a belt conveyor cleaning device as per the invention, which involves a load-carrying frame fitted with a resting surface. The underside of the conveyor belt slides along the resting surface in the ascending branch. The conveyor belt has ribs attached crosswise on its carrying surface, which are shorter than the width of the conveyor belt. A tunnel housing is attached to the load-carrying frame of both the ascending and the return branches, comprising a dome adapted to allow the passage of the ribs and side boards. The smooth edges of the conveyor belt carrying surface slide along the side boards in the return branch. The essence of the invention consists in the fact that the return branch applies at least one wiper bar to the underside of the conveyor belt, and a shaft is rendered on the load-carrying frame by the side of the conveyor belt within the range of the wiper bar. The entry point of an ascending conveyor is arranged at the bottom of the shaft. The discharge area of the ascending conveyor leads into the tunnel housing dome.

This layout of the wiper bar and the shaft results in wiping contamination off the conveyor belt underside. As a result, this guarantees constant forces in the point of contact between the driving roller and the conveyor belt, and eliminates potential damage to the conveyor belt, the resting surface and all the rollers around which the conveyor belt runs.

The efficiency is increased even more by an arrangement where a separate shaft with a coupled wiper bar is rendered on either side of the conveyor belt, and each of the shafts has an entry point to an ascending conveyor.

An especially convenient design is one where the shafts are situated symmetrically to the longitudinal axis of the conveyor belt and the wiper bar consists of two arms, the front ends of which are interconnected and the rear ends lead to the shaft entry points.

It is convenient to clean the return roller as well in order to promote clean contact between the return roller - the roller that carries the conveyor belt from the return branch to the ascending branch - and the underside of the conveyor belt. For this reason, the shafts are situated within reach of the return roller, against which a wiper rests that connects to inclined discharge surfaces connected to the arms of the wiper bar.

It is convenient to clean not only the underside of the conveyor belt but also the smooth edge of its carrying surface. For this reason, the shaft entry area rendered in the load-carrying frame is extended to the edge.

The most convenient ascending conveyor is a screw conveyor the screw of which is coupled to a source of torque; the loose end of the screw leads into the tunnel housing dome and the opposite end of the screw is mounted at the bottom of the shaft.

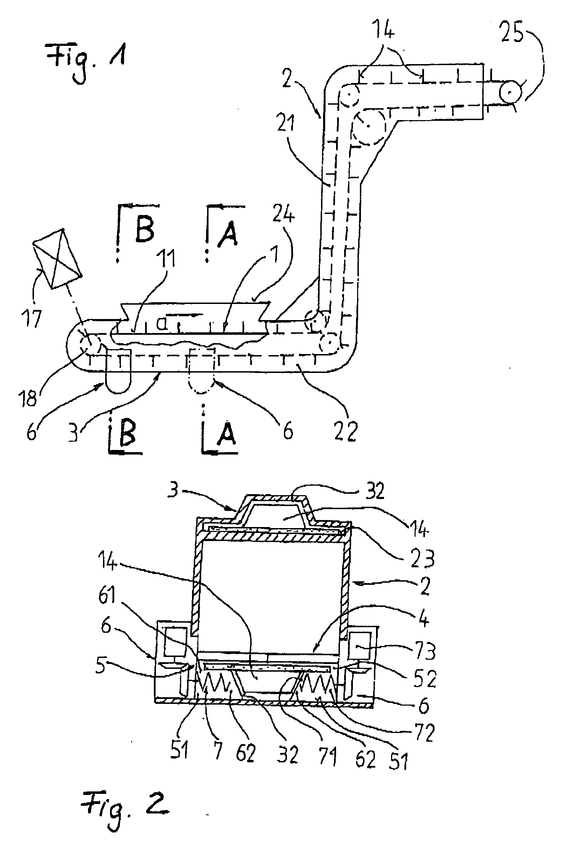

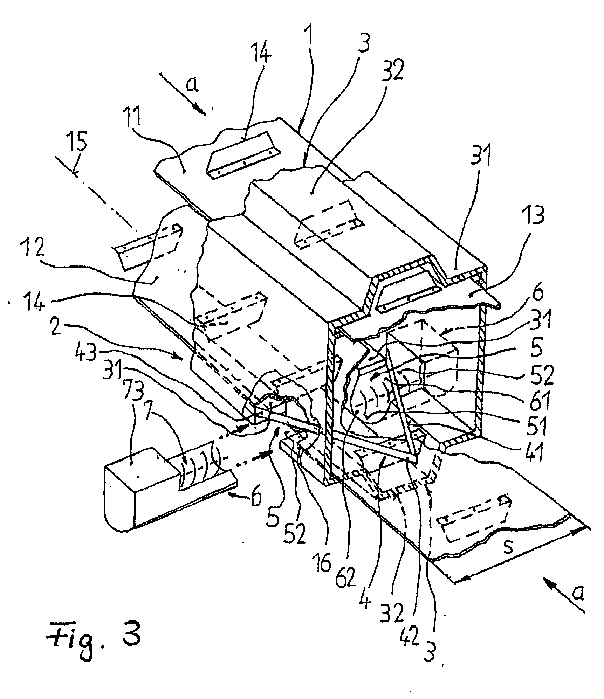

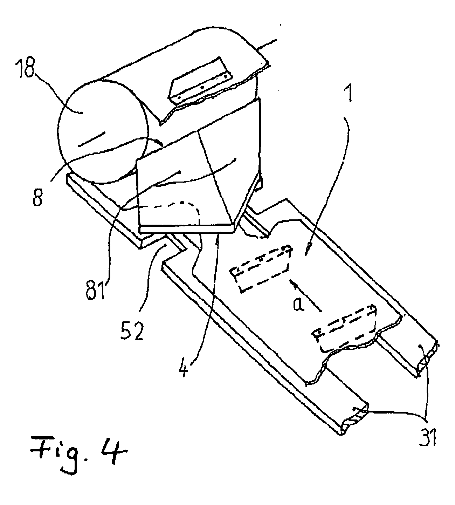

An enclosed drawing is a schematic representation of an example rendering of the belt conveyor cleaning device as per the invention: Fig. 1 is a side elevation view of the belt conveyor in a steep configuration; Fig. 2 is the frontal cross-section A-A of Fig. 1; Fig. 3 is an axonometric view of the belt conveyor with a cleaning device as per the cross-section A-A where one of the ascending conveyors is removed from the load-carrying frame; Fig. 4, a cross-section B-B of Fig. 1, is an axonometric view of the return roller wiper coupled with a wiper bar.

The belt conveyor with a cleaning device as per the invention applied comprises a load-carrying frame 2 on which a conveyor belt 1 is mounted. The belt conveyor is fitted with a loading area 24, connected via an ascending branch 21 with a discharge area 25. A return branch 22 is rendered in the opposite direction. In the rendering as per Figure 1, the belt conveyor is shown as a steep one, where the return roller 18 that transforms the return branch 22 into the ascending branch 21 is coupled with a driving motor 17. In order to carry the conveyor belt 1 along the ascending branch 21, a resting surface 23; which can be seen in Fig. 2 is fastened to the load-carrying frame 2, along which the underside 12 of the conveyor belt 1 slides. Ribs 14 are attached to the carrying surface 11 of the conveyor belt 1 crosswise to the movement direction; the ribs 14 are shorter than the width of the conveyor belt 1 which can be seen in Fig. 3.

A tunnel housing 3 is attached to both the ascending branch 21 and the return branch 22 of the load-carrying frame 2; it comprises a dome 32 and two side boards 31. The dome 32 is adapted to allow the passage of the ribs 14. For this reason, its cross-section is equidistant to the shape of the ribs 14. There is a clearance in the ascending branch 21 between the side boards 31 and the smooth edges 13 of the carrying surface 11 of the conveyor belt 1, i.e., edges where the ribs 14 do not reach; it is expedient to eliminate this clearance with a seal, which is not pictured. In contrast, the smooth edges 13 of the carrying surface 11 of the conveyor belt 1 slide along the side boards 31 in the return branch 22. The design and layout may obviously be more complex in any real rendering than in the described example. For instance, the side boards 31 may be anchored directly in the load-carrying frame 2 for reinforcement. What is important, however, is that the relations among the described components in any real rendering will remain identical to those in the schematic rendering presented.

As can be seen in Fig. 3 or Fig. 4 the cleaning device involves at least one wiper bar 4 applied to the underside 12 of the conveyor belt 1 in the return branch 22. A shaft 5 is rendered in the load-carrying frame 2 by the side 16 of the conveyor belt 1 within its operating range. A feed area 61 of an ascending conveyor 6 is arranged at the bottom 51 of the shaft 5; its discharge area 62 leads into the dome 32 of the tunnel housing 3. The cleaning effect is considerably improved if a separate shaft 5 with its own coupled wiper bar 4 is installed at either side 16 of the conveyor belt 1. In this case, each of the shafts 5 also has a feed area 61 of an ascending conveyor 6. The optimum design is as pictured in Fig. 3, where the shafts 5 are situated symmetrical to the longitudinal axis 15 of the conveyor belt 1 and the wiper bar 4 consists of two arms 41, the front ends of which 42 are interconnected and the rear ends 43 lead to the feed holes 52 of the shafts 5. In order to wipe contamination off the smooth edge 13 of the carrying surface 11 of the conveyor belt 1 as well, the feed hole 52 of the shaft 5 rendered in the load-carrying frame 2 is extended to the side board 31. The contamination wiped off the carrying surface 11 and the underside 12 of the conveyor belt is returned to the transfer area between the ribs 14 by way of an ascending screw conveyor 6, the screw 7 of which is coupled with a source 73 of torque. The loose end 71 of the screw 7 leads into the dome 32 of the tunnel housing 3 and the opposite end 72 of the screw 7 is mounted at the bottom 51 of the shaft 5.

This type of cleaning device can be installed virtually anywhere along the return branch 22, for example where the ascending conveyor 6 is shown with a dot-and-dash line in Fig. 1. The cleaning device for the conveyor belt 1 can be coupled with a wiper 8 for the return roller 18. In that case, the shafts 5 are installed within reach of the return roller 18; see the solid line in Fig. 1, depicting the ascending conveyor 6. A can be seen in Fig. 4 a wiper 8 rests against the return roller 18; it connects to inclined discharge surfaces 81 which are connected to the arms 41 of the wiper bar 4.

When the belt conveyor is in operation, the motor 17 actuates the conveyor belt 1, which moves in the direction a. Material is poured onto the conveyor belt 1 continually in the feed point 24 and carried along the ascending branch 21 to the discharge point 25. The ribs 14 are the major carrier of the material, especially along the steep portion of the ascending branch 21. The carried material essentially fills the entire cross-section of the ascending branch 21, delimited by the dome 32 of the tunnel housing 3. The material is discharged off the conveyor belt 1 in the discharge point 25.

When being transported along the ascending branch 21 and discharged in the discharging point 25, bits of the transported material may get onto the underside 12 and the smooth edges 13 of the carrying surface 11 of the conveyor belt 1, where they act as contamination that ought to be removed. The underside 12 of the conveyor belt 1 is cleaned by a wiper bar 4, which scrapes off the contamination that has stuck and moves it towards the side 16 of the conveyor belt 1. From there, it is shifted to the feed hole 52, through which it falls to the bottom 51 of the shaft 5, where it is accepted by the feed area 61 of the ascending conveyor 6.

The discharge area 62 places the contamination between the ribs 14, which take the contamination to the ascending branch 21 via the return roller 18.

In the cleaning device with its feed hole 52 extended to the side boards 31, the smooth edges 13 of the carrying surface 11 of the conveyor belt 1 are cleaned by rubbing against the edges of the feed hole 52. The contamination removed in this fashion also gets to the bottom 51 of the shaft 5 and then is taken between the ribs 14 as in the previous case.

In the most complex version, where the wiper bar 4 is coupled with a wiper 8 for the return roller 18 contamination scraped off the return roller 18 goes via the discharge surfaces 81 to the feed hole 52, from where it is taken back to the material fed into the ascending branch 21 in the same way.

The cleaning device is intended for covered belt conveyors fitted with ribs, designed for steep to vertical ascending transport of non-abrasive loose materials with bulk weights up to 300 kg/m³.

### List of terms

1 - conveyor belt
11 - carrying surface
12 - underside
13 - smooth edge
14 - rib
15 - longitudinal axis
16 - side
17 - drive motor
18 - return roller
2 - load-carrying frame
21 - ascending branch
22 - return branch
23 - resting surface
24 - feed point
25 - discharge point
3 - tunnel housing
31 - side board
32 - dome
4 - wiper bar
41 - arm
42 - front end
43 - rear end
5 - shaft
51 - bottom
52 - feed hole
6 - ascending conveyor
61 - feed area
62 - discharge area
7 - screw
71 - loose end
72 - opposite end
73 - source of torque
8 - wiper
81 - discharge surface

a - movement direction
s - width

## Claims

1. A belt conveyor cleaning device comprising
- a load-carrying frame (2) fitted with
- - a resting surface (23), on which along the ascending branch (21) the underside (12) of a conveyor belt (1) slides,
- said conveyor belt has ribs (14) attached crosswise to the movement direction (a), and those ribs (14) are shorter than the width (s) of the conveyor belt (1),
- whereas a tunnel housing (3) is attached to the load-carrying frame (2) along both the ascending branch (21) and the return branch (22),
- and said tunnel housing (3) comprises a dome (32) adapted to allow passage of the ribs (14) and side boards (31), along which the smooth edges (13) of the carrying surface (11) of the conveyor belt (1) slide in the return branch (22), **characterized In that** at least one wiper bar (4) is fastened over the underside (12) of the conveyor belt (1) along the return branch (22)
- wherein a shaft (5) is provided in the load-carrying frame (2) by the side (16) of the conveyor belt (1) within the operating range of the wiper bar (4),
- wherein the feed area (61) of a screw conveyor (6) is arranged at the bottom (51) of the shaft (5), whereas its discharge area (62) leads into the dome (32) of the tunnel housing (3),
- wherein the screw (7) of the screw conveyor (6) is coupled to a source of torque.

2. A cleaning device according to claim 1, **characterized in that** a separate shaft (5) with a coupled wiper bar (4) is provided at either side (16) of the conveyor belt (1), where each of the shafts (5) contains a feed area (61) of a screw conveyor (6), wherein the screw (7) of the screw conveyor (6) is coupled to a source of torque.

3. A cleaning device according to claim 2, **characterized in that** the shafts (5) are situated symmetrical to the longitudinal axis (15) of the conveyor belt (1) and the wiper bar (4) consists of two arms (41), which front ends (42) are Interconnected and which rear ends (43) lead to the feed holes (52) of the shafts (5).

4. A cleaning device according to claim 3, **characterized in that** the shafts (5) are situated within the range of a return roller (18), against which a wiper (8) rests and connects to inclined discharge surfaces (81), connected to the arms (41) of the wiper bar (4).

5. A cleaning device according to any preceding claim, **characterized in that** the feed hole (52) of the shaft (5) provided in the load-carrying frame (2) extends to the side boards (31).

6. A cleaning device according to any preceding claim, **characterized in that** the loose end (71) of the screw (7) of the screw conveyor (6) leads into the dome (32) of the tunnel housing (3) and the opposite end (72) of the screw (7) is mounted at the bottom (51) of the shaft (5).

## Patentansprüche

1. Bandfördererreinigungsvorrichtung, umfassend:
- einen Lasttragrahmen (2), der mit
- einer Auflagefläche (23) ausgestattet ist, auf der entlang dem aufsteigenden Zweig (21) die Unterseite (12) eines Förderbands (1) gleitet,
- wobei das Förderband Rippen (14) aufweist, die quer zur Bewegungsrichtung (a) befestigt sind, und wobei diese Rippen (14) kürzer als die Breite (s) des Förderbands (1) sind,
- während ein Tunnelgehäuse (3) sowohl entlang dem aufsteigenden Zweig (21) als auch dem Rücklaufzweig (22) am Lasttragrahmen (2) befestigt ist,
- und das Tunnelgehäuse (3) einen Dom (32) umfasst, der dazu ausgeführt ist, die Rippen (14) und Seiterlwände (31), entlang denen die glatten Ränder (13) der Tragfläche (11) des Förderbands (1) im Rücklaufzweig (22) gleiten, durchzulassen,
**dadurch gekennzeichnet, dass** mindestens eine Wischerleiste (4) entlang dem Rücklaufzweig (22) über die Unterseite (12) des Förderbands (1) befestigt ist,
- wobei ein Schacht (5) an der Seite (16) des Förderbands (1) innerhalb des Arbeitsbereichs der Wischerleiste (4) im Lasttragrahmen (2) vorgesehen ist,
- wobei der Zufuhrbereich (61) eines Schneckenförderers (6) am Boden (51) des Schachts (5) vorgesehen ist, während sein Abführbereich (62) in den Dom (32) des Tunnelgehäuses (3) führt,
- wobei die Förderschnecke (7) des Schneckenförderers (6) mit einer Drehmomentquelle gekoppelt ist.

2. Reinigungsvorrichtung nach Anspruch 1, **dadurch gekennzeichnet, dass** ein getrennter Schacht (5) mit einer gekoppelten Wischerleiste (4) auf beiden Seiten (16) des Förderbands (1) vorgesehen ist, wobei jeder der Schächte (5) einen Zufuhrbereich (61) eines Schneckenförderers (6) enthält, wobei die Förderschnecke (7) des Schneckenförderers (6) mit einer Drehmomentquelle gekoppelt ist.

3. Reinigungsvorrichtung nach Anspruch 2, **dadurch gekennzeichnet, dass** die Schächte (5) symmetrisch zur Längsachse (25) des Förderbands (1) positioniert sind und die Wischerleiste (4) aus zwei Armen (41) besteht, deren Vorderenden (42) miteinander verbunden sind und deren Hinterenden (43) zu den Zufuhrlöchern (52) der Schächte (5) führen.

4. Reinigungsvorrichtung nach Anspruch 3, **dadurch gekennzeichnet, dass** die Schächte (5) im Bereich einer Rücklaufrolle (18) positioniert sind, gegen die ein Wischer (8) anliegt, der an geneigte Abführflächen (81) anschließt, die mit den Armen (41) der Wischerleiste (4) verbunden sind.

5. Reinigungsvorrichtung nach einem vorhergehenden Anspruch, **dadurch gekennzeichnet, dass** sich das Zufuhrloch (52) des im Lasttragrahmen (2) vorgesehen Schachts (5) zu den Seitenwänden (31) erstreckt.

6. Reinigungsvorrichtung nach einem vorhergehenden Anspruch, **dadurch gekennzeichnet, dass** das lose Ende (71) der Förderschnecke (7) des Schneckenförderers (6) in den Dom (32) des Tunnelgehäuses (3) führt und das gegenüberliegende Ende (72) der Förderschnecke (7) am Boden (51) des Schachts (5) angebracht ist.

## Revendications

1. Dispositif de nettoyage d'une bande convoyeuse, comprenant:
un cadre de support de charge (2) présentant une surface d'appui (23) sur laquelle la face inférieure (12) d'une bande convoyeuse (1) glisse le long de la branche ascendante (21),
ladite bande convoyeuse comporte des nervures (14) attachées transversalement à la direction de déplacement (a), lesdites nervures (14) étant plus courtes que la (les) largeur(s) de la bande convoyeuse (1),
alors qu'un boîtier de tunnel (3) est attaché au cadre de support de charge (2) le long à la fois de la branche ascendante (21) et de la branche de retour (22), et
ledit boîtier de tunnel (3) comprend un dôme (32) adapté pour permettre le passage des nervures (14) et des planches latérales (31) le long desquelles les bords lisses (13) de la surface de support (11) de la bande convoyeuse (1) glissent dans la branche de retour (22),
**caractérisé en ce qu'**au moins une barre d'essuyage (4) est attachée sur la face inférieure (12) de la bande convoyeuse (1) le long de la branche de retour (22),
dans lequel un arbre (5) est prévu dans le cadre de support de charge (2) par le côté (16) de la bande convoyeuse (1) à l'intérieur du champ d'action de la barre d'essuyage (4),
dans lequel la région d'alimentation (61) d'un convoyeur à vis (6) est prévue au pied (51) de l'arbre (5), alors que sa région de décharge (62) conduit dans le dôme (32) du boîtier de tunnel (3), et
dans lequel la vis (7) du convoyeur à vis (6) est couplée à une source de couple.

2. Dispositif de nettoyage selon la revendication 1, **caractérisé en ce qu'**un arbre séparé (5) avec une barre d'essuyage couplée (4) est prévu sur les deux côtés (16) de la bande convoyeuse (1), dans lequel chacun des arbres (5) comprend une région d'alimentation (61) d'un convoyeur à vis (6), dans lequel la vis (7) du convoyeur à vis (6) est couplée à une source de couple.

3. Dispositif de nettoyage selon la revendication 2, **caractérisé en ce que** les arbres (5) sont disposés symétriquement par rapport à l'axe longitudinal (15) de la bande convoyeuse (1) et la barre d'essuyage (4) est constituée de deux bras (41) dont les extrémités avant (42) sont interconnectées et dont les extrémités arrière (43) conduisent aux trous d'alimentation (52) des arbres (5).

4. Dispositif de nettoyage selon la revendication 3, **caractérisé en ce que** les arbres (5) sont situés à l'intérieur de la portée d'un rouleau de retour (18), contre lequel un essuyeur (8) s'appuie et se connecte à des surfaces de décharge inclinées (81) connectées aux bras (41) de la barre d'essuyage (4).

5. Dispositif de nettoyage selon l'une quelconque des revendications précédentes, **caractérisé en ce que** le trou d'alimentation (52) de l'arbre (5) prévu dans le cadre de support de charge (2) s'étend jusqu'aux planches latérales (31).

6. Dispositif de nettoyage selon l'une quelconque des revendications précédentes, **caractérisé en ce que** l'extrémité libre (71) de la vis (7) du convoyeur à vis (6) conduit dans le dôme (32) du boîtier de tunnel (3), et l'extrémité opposée (72) de la vis (7) est montée au pied (51) de l'arbre (5).
